# EUROPÄISCHE PATENTANMELDUNG

(11) **EP 1 637 366 A1**
(43) Veröffentlichungstag der Anmeldung: **22.03.2006**
(21) Anmeldenummer: 05107572.9
(22) Anmeldetag: 17.08.2005
(51) Int. Cl.: B60G 3/20

(54) **Vorderachse eines zweispurigen Fahrzeugs mit aufgelöstem unteren Lenkerverband**

(30) Priorität: 11.09.2004 DE 102004043953
(71) Anmelder: Bayerische Motoren Werke Aktiengesellschaft, 80809 München (DE)
(72) Erfinder: Manseicher, Josef, 85635, Höhenkirchen-Siegertsbrunn (DE); Rektorik, Peter, 85375, Neufahrn (DE); Hill, Matthew, 81545, München (DE); Boettcher, Uwe, 82110, Germering (DE); Manicke, Bernd, 85664, Hohenlinden (DE); Waenninger, Philipp, 80937, München (DE)

(57) **Zusammenfassung**

Die Erfindung betrifft eine Vorderachse eines zweispurigen Fahrzeugs mit aufgelöstem unteren Lenkerverband in Form jeweils einer Spurstange (3) für das lenkbare Rad (1), eines im wesentlichen in Fahrzeug-Querrichtung (Q) ausgerichteten Querlenkers (4), sowie einer im wesentlichen in Fahrzeug-Längsrichtung (L) ausgerichteten Druckstrebe (5), die am Radträger (2) hinter Radmitte (M) angelenkt ist und sich gegen Fahrtrichtung (FR) nach hinten erstreckt, wobei der vor der Druckstrebe (5) am Radträger (2) angelenkte Querlenker (4) unter einem Winkel (α) in der Größenordnung 4° bis 20° gegenüber der Fahrzeug-Querachse (Q) nach vorne gepfeilt ist und mit der davor angeordneten Spurstange (3) der Zahnstangenlenkung einen vor Radmitte (M) liegenden Momentanpol (P) bildet, der in Konstruktionslage in Fahrzeug-Querrichtung (Q) betrachtet zwischen 100 mm und 3000 mm von der Radmitte (M) beabstandet ist.

## Beschreibung

Die Erfindung betrifft eine Vorderachse eines zweispurigen Fahrzeugs mit aufgelöstem unteren Lenkerverband in Form jeweils einer Spurstange für das lenkbare Rad, eines im wesentlichen in Fahrzeug-Querrichtung ausgerichteten Querlenkers, sowie einer im wesentlichen in FahrzeugLängsrichtung ausgerichteten Druckstrebe, die am Radträger hinter Radmitte angelenkt ist und sich gegen Fahrtrichtung nach hinten erstreckt.

Vorderachsen mit aufgelöstem unteren Lenkerverband (nach dem sog. Doppelgelenkprinzip) sind in Ausprägung als Zugstrebe und Querlenker oder in Ausprägung als Druckstrebe und Querlenker, jeweils in Kombination mit einem annähernd in der Lenkerebene angebrachten, vorne liegenden Zahnstangenlenkgetriebe bekannt. Dabei kann die Vorderachse als Federbeinachse oder als Doppelquerlenkerachse ausgeführt und mit oder ohne Antrieb ausgestattet sein. Eine für die Kinematik der Vorderachse wesentliche Größe ist dabei die Lage des Momentanpoles, der aus den Bahnnormalen von Querlenker und Zugstrebe bzw. Druckstrebe gebildet wird. Weitere wichtige Größen sind der Anstellwinkel des Querlenkers zur Fahrzeugquerrichtung (= sog. Pfeilungswinkel) und die Lage des Zahnstangen-Lenkgetriebes.

Bei einer Achse in Zugstreben-Ausführung erfolgt die Längskraftabstützung vorrangig über einen Lenker, der deutlich vor Mitte Rad an einem Achsträger oder dgl. angebunden ist. Um bei hohen Fahrzeuggeschwindigkeiten ein gewünschtes indirektes Ansprechen des Fahrzeugs auf Lenkeingaben des Fahrers zu erreichen, wird bei diesem Achsprinzip der Querlenker üblicherweise mit einem Gummilager relativ weich am Vorderachsträger des Fahrzeugs gelagert. Bei Zugstrebenachsen sollte außerdem aus Gründen der Radbewegung bei Bremsvorgängen und gleichzeitiger Kurvenfahrt der Momentanpol nahezu im Unendlichen liegen, wenn er sich auf der Außenseite des kurvenäußeren Rades befindet, alternativ kann er auf der Innenseite des kurvenäußeren Rades liegen. Beide beschriebenen Momentanpollagen führen unter Berücksichtigung der möglichen Positionen eines Lenkgetriebes dazu, dass der Querlenker nahezu in Fahrzeugquerrichtung liegt oder geringfügig gegen Fahrtrichtung, d.h. also nach hinten gepfeilt ist. Bei angetriebenen Vorderachsen führt dies quasi zwangsläufig zu Bauraumproblemen, da die Abtriebswelle und der Querlenker übereinander liegen und für die Lagerung des Querlenkers am Vorderachsträger oder dgl. wegen Einhaltung einer minimalen Bodenfreiheit zuwenig Platz für ein großvolumiges Gummilager verbleibt. Das Querlenkergummilager muss also im Durchmesser sehr klein ausgeführt werden, was nachteilig ist hinsichtlich der Federungseigenschaften und der Standfestigkeit. Ein weiterer Nachteil ist, dass bei Doppelquerlenkerachsen das Federbein auf dem Querlenker angebracht ist. Ist der Querlenker nach hinten gepfeilt oder befindet er sich in einer Lage quer zur Fahrrichtung (aus oben beschriebenen Zwängen), so kann dies - bei üblicher Anbindung des Bremssattels - bei stark eingeschlagenen Rädern zu einer Engstelle zwischen dem Bremssattel und dem Federbein kurveninnen. Wäre der Querlenker nach vorne gepfeilt, so ließe sich diese Engstelle beseitigen.

Bei einer Achse in Druckstrebenausführung erfolgt die Längskraftabstützung vorrangig über einen Lenker, der deutlich hinter Mitte Rad an einem Achsträger oder dgl. angebunden ist. Dieses Achskonzept hat in Verbindung mit einer Zahnstangenlenkung jedoch den Nachteil, dass keine weiche Lagerung des Querlenkers möglich ist, wenngleich eine solche funktional erwünscht wäre, um ein indirektes Ansprechen des Fahrzeugs auf Lenkeingaben des Fahrers insbesondere bei hohen Fahrgeschwindigkeiten zu erreichen. Der Grund dafür, dass bei den soweit bekannten Vorderachsen in Druckstrebenausführung im aufgelösten unteren Lenkerverband keine weiche Lagerung des Querlenkers möglich ist, liegt in der Radbewegung bei Bremsvorgängen, die das Rad bei höheren Bremskräften in Richtung Vorspur drehen. Beim Bremsen während einer Kurvenfahrt kann dadurch ein instabiler Fahrvorgang ausgelöst werden. Um dies zu vermeiden, wird somit im bekannten Stand der Technik der Querlenker möglichst hart, zumeist über ein Kugelgelenk, am Vorderachsträger gelagert, wobei der beschriebene Nachteil, nämlich dass ein indirektes Ansprechen des Fahrzeugs auf Lenkeingaben des Fahrers insbesondere bei hohen Fahrgeschwindigkeiten nicht erreicht werden kann, in Kauf genommen wird.

Hiermit soll nun eine Vorderachse in Druckstreben-Ausführung aufgezeigt werden, die diesen letztgenannten Nachteil nicht aufweist (= Aufgabe der vorliegenden Erfindung).
Die Lösung dieser Aufgabe ist für eine Vorderachse nach dem Oberbegriff des Anspruchs 1 dadurch gekennzeichnet, dass der vor der Druckstrebe am Radträger angelenkte Querlenker unter einem Winkel in der Größenordnung 4° bis 20° gegenüber der Fahrzeug-Querachse nach vorne gepfeilt ist und mit der davor angeordneten Spurstange der Zahnstangenlenkung einen vor Radmitte liegenden Momentanpol bildet, der in Konstruktionslage in Fahrzeug-Querrichtung betrachtet zwischen 100 mm und 3000 mm von der Radmitte beabstandet ist. Bevorzugt ist der Querlenker unter einem Winkel in der Größenordnung 8° bis 12° gegenüber der Fahrzeug-Querachse nach vorne gepfeilt und der Momentanpol zwischen 600 mm und 900 mm von der Radmitte beabstandet.

Für zweispurige Fahrzeuge, bei denen entweder an der Vorderachse eine weiche Lagerung des Querlenkers schwierig bzw. ausgeschlossen ist oder für Doppelquerlenkerachsen, die Bauraumprobleme zwischen Bremssattel und Federbein haben, wird somit zunächst ein Achskonzept mit sich nach hinten erstreckender Druckstrebe und vorne liegender Zahnstangenlenkung vorgeschlagen. Der Querlenker ist dabei nach vorne gepfeilt, d.h. vor Radmitte an einem Achsträger oder dgl. angebunden, was die Engstelle zwischen Bremssattel und Federbein bei Doppelquerlenkerachsen entschärft. Da - wie bereits erläutert - dieses Achskonzept in Verbindung mit einer Zahnstangenlenkung den Nachteil hat, dass das gewünschte indirekte Ansprechen des Fahrzeugs auf Lenkeingaben des Fahrers bei hohen Fahrgeschwindigkeiten nicht über eine weiche Lagerung des Querlenkers erreicht werden kann, wird weiterhin vorgeschlagen, den Querlenker und die Spurstange in der Weise anzuordnen, dass sich der Momentanpol auf der Innenseite des Rades befindet (und somit zumindest 100 mm von der Radmitte beabstandet ist) und dass der in Fzg.-Querrichtung gemessene Abstand zwischen dem Momentanpol und der Radmitte relativ klein ist. Als kleiner Abstand sind Abstände von Mitte Rad zum Momentanpol von kleiner 3000 mm zu sehen, in einer besonders bevorzugten Ausführungsform mit hervorragenden kinematischen Eigenschaften liegt dieser Abstand in der Größenordnung von 600 mm bis 900 mm. Damit dieser gewünschte Momentanpol-Abstand (gemäß Anspruch 1 bzw. Anspruch 2) erzielt wird, ist die Pfeilung des Querlenkers gegenüber der Fahrzeugquerrichtung derart gewählt, dass der Anbindungspunkt des Querlenkers innen, d.h. am Achsträger oder dgl., in Fahrtrichtung betrachtet deutlich vor dem Anbindungspunkt außen, d.h. am Radträger oder dgl., liegt. Die sich damit ergebenden sog. Pfeilungswinkel des Querlenkers zur Fahrzeugquerrichtung können zwischen 4° und 20° liegen, in einer besonders bevorzugten Ausführungsform mit hervorragenden kinematischen Eigenschaften liegt dieser Pfeilungswinkel in der Größenordnung von 8° bis 12°. Damit liegt der Momentanpol in Fahrtrichtung betrachtet eindeutig vor Radmitte.

Es wurde erkannt, dass durch den wie angegeben nach vorne gepfeilten Querlenker unter Seitenkrafteinfluss (und somit beim Lenken) das kurvenäußere Rad eine Längsbewegung nach hinten, also entgegen der Fahrrichtung, ausführt. Während dieser Längsbewegung vollführt dieses Rad somit gleichzeitig eine Drehbewegung um den innenliegenden Momentanpol und erzeugt dabei kinematisch einen Radeinschlag, der den vom Fahrer eingegebenen Radlenkwinkel reduziert und dadurch ein gewünschtes indirektes Ansprechen des Fahrzeugs erzeugt. Für das kurveninnere Rad mit entgegen gerichteter Seitenkraft-Belastung des Querlenkers ergibt sich somit eine geringe Rad-Längsbewegung nach vorne in Fahrtrichtung und somit ebenfalls eine Reduzierung des vom Fahrer vorgegebenen Lenkwinkels.

Vorteilhafterweise ist dieser Effekt umso ausgeprägter, je höher die Fahrgeschwindigkeit ist, da mit zunehmender Fahrgeschwindigkeit die vom Fahrer eingegebenen Radlenkwinkel zum Erreichen einer bestimmten Querbeschleunigung immer kleiner werden. Der kinematische Radeinschlag ist aber nur von der Seitenkraft bzw. Querbeschleunigung abhängig und ist dadurch unabhängig von der Fahrgeschwindigkeit. Der Anteil und die Auswirkung des kinematischen Radeinschlags nimmt daher bei hohen Fahrgeschwindigkeiten stark zu, d.h. mit der vorgeschlagenen Konstruktionslage des Momentanpols von Spurstange und wie vorgeschlagen angeordnetem Querlenker stellt sich automatisch ein indirektes Ansprechen des Fahrzeugs auf Lenkeingaben des Fahrers insbesondere bei hohen Fahrgeschwindigkeiten ein, und zwar trotz einer harten Abstützung des Querlenkers am Vorderachsträger oder dgl., was wie weiter oben ausgeführt aus Gründen der Fahrstabilität erwünscht ist. Mit der vorgeschlagenen Achskonstruktion kann somit der Querlenker hart am Vorderachsträger oder dgl. angelenkt sein. Vorteilhafterweise ist durch die Pfeilung des Querlenkers nach vorne bei Doppelquerlenkerachsen die Engstelle zwischen Bremssattel und dem auf dem Querlenker stehenden Federbein bei großen Radeinschlägen kurveninnen entschärft und es wird grundsätzlich bei angetriebenen Vorderachsen die Engstelle zwischen der Abtriebswelle und dem Querlenker bei Erhalt der minimalen Bodenfreiheit vermieden.

Die beigefügte Prinzipskizze zeigt die Sicht von oben auf einen erfindungsgemäßen unteren Lenkerverband eines linken Vorder-Rades, das mit der Bezugsziffer 1 gekennzeichnet und im nicht eingeschlagenen Zustand dargestellt ist. Am Radträger 2 dieses Rades 1 ist in Fahrtrichtung FR betrachtet vorne liegend eine Spurstange 3 und hinter dieser ein Querlenker 4 angelenkt. Hinter diesem sowie hinter Radmitte M ist am Radträger 2 eine sog. Druckstrebe 5 angelenkt, die im wesentlichen in FahrzeugLängsrichtung L ausgerichtet ist und sich gegen Fahrtrichtung FR nach hinten erstreckt. Sowohl die Druckstrebe 5 als auch der Querlenker 4 sind mit ihrem dem Radträger 2 abgewandten Ende jeweils über ein geeignetes, im wesentlichen nicht elastisches Gelenk 7 an einem nicht dargestellten Vorderachsträger angelenkt, der ferner vorn angeordnet ein ZahnstangenLenkgetriebe 6 trägt, an dessen Abtrieb die Spurstange 3 angelenkt ist. Geeignete ebenfalls im wesentlichen nicht elastische Gelenke 7 sind im übrigen wie üblich auch zwischen den jeweiligen Lenkern 3, 4, 5 und dem Radträger 2 vorgesehen.

Der Querlenker 4 ist nach vorne gepfeilt, d.h. sein radseitiger Anlenkpunkt liegt in Fahrtrichtung FR betrachtet hinter dem achsträgerseitigen Anlenkpunkt, wobei der sog. Pfeilungswinkel α zwischen der durch die Anlenkpunkte definierten Längsachse des Querlenkers 4 und der Fzg.-Querachse Q in der Größenordnung von 10° liegt. Mit der Spurstange 3 bildet der Querlenker 3 demzufolge einen Momentanpol P, der auf der Innenseite des Rades 1 vor Radmitte M liegt, und der hier um die Strecke c = 750 mm von der Radmitte M beabstandet ist.

In dieser Figur ist das Rad 1 mit seiner Radmittenebene E zwar in Geradeausstellung dargestellt; gleichzeitig in Form des Pfeiles a dargestellt ist die bereits genannte Längsverlagerung, die dieses Rad 1 als kurvenäußeres Rad aufgrund der Ausrichtung des hart gelagerten Querlenkers 4 erfährt. Eine hieraus bei Kurvenfahrt resultierende Verschwenkbewegung der Radmittenebene E um den Momentanpol P in die Position E' ergibt somit - da es sich um das kurvenäußere Rad handelt - wie ersichtlich eine Reduktion des vom Fahrer vorgegebenen Lenkwinkels. Selbstverständlich können die genannten Maße auch in gewissem Rahmen von diesen Werten abweichen, wie überhaupt Details durchaus abweichend von obigen Erläuterungen gestaltet sein können, ohne den Inhalt der Patentansprüche zu verlassen.

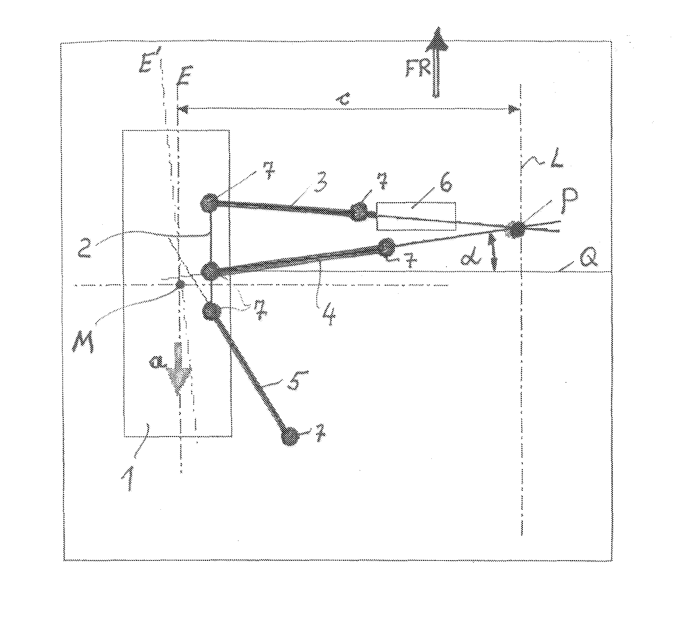

## Patentansprüche

1. Vorderachse eines zweispurigen Fahrzeugs mit aufgelöstem unteren Lenkerverband in Form jeweils einer Spurstange (3) für das lenkbare Rad (1), eines im wesentlichen in Fahrzeug-Querrichtung (Q) ausgerichteten Querlenkers (4), sowie einer im wesentlichen in FahrzeugLängsrichtung (L) ausgerichteten Druckstrebe (5), die am Radträger (2) hinter Radmitte (M) angelenkt ist und sich gegen Fahrtrichtung (FR) nach hinten erstreckt,
**dadurch gekennzeichnet, dass** der vor der Druckstrebe (5) am Radträger (2) angelenkte Querlenker (4) unter einem Winkel (α) in der Größenordnung 4° bis 20° gegenüber der Fahrzeug-Querachse (Q) nach vorne gepfeilt ist und mit der davor angeordneten Spurstange (3) der Zahnstangenlenkung einen vor Radmitte (M) liegenden Momentanpol (P) bildet, der in Konstruktionslage in Fahrzeug-Querrichtung (Q) betrachtet zwischen (c=) 100 mm und 3000 mm von der Radmitte (M) beabstandet ist.

2. Vorderachse nach Anspruch 1,
**dadurch gekennzeichnet, dass** der Querlenker (4) unter einem Winkel (α) in der Größenordnung 8° bis 12° gegenüber der Fahrzeug-Querachse (Q) nach vorne gepfeilt ist und der Momentanpol (P) zwischen (c=) 600 mm und 900 mm von der Radmitte (M) beabstandet ist.
